Europäisches Patentamt

**European Patent Office**

Office européen des brevets

(19)

(11) Numéro de publication: **0 148 796**
**A2**

(12) ## DEMANDE DE BREVET EUROPEEN

(21) Numéro de dépôt: **85400014.8**

(22) Date de dépôt: **07.01.85**

(51) Int. Cl.⁴: **B 01 D 53/04**

(30) Priorité: **11.01.84 FR 8400333**

(43) Date de publication de la demande: **17.07.85**
**Bulletin 85/29**

(84) Etats contractants désignés: **AT BE CH DE FR GB IT LI LU NL SE**

(71) Demandeur: **L'AIR LIQUIDE, SOCIETE ANONYME POUR L'ETUDE ET L'EXPLOITATION DES PROCEDES GEORGES CLAUDE, 75, Quai d'Orsay, F-75321 Paris Cedex 07 (FR)**

(72) Inventeur: **Pelloux Gervais, Pierre, 17, avenue de la Poste Seyssinet Pariset, F-38170 Seyssins (FR)**
Inventeur: **Zapata, Richard Lotissement Rivoire de la Dame, Les Hauts de Sassenage, F-38360 Sassenage (FR)**

(74) Mandataire: **Jacobson, Claude et al, L'AIR LIQUIDE, SOCIETE ANONYME POUR L'ETUDE ET L'EXPLOITATION DES PROCEDES GEORGES CLAUDE 75, quai d'Orsay, F-75321 Paris Cedex 07 (FR)**

(54) **Récipient pour éliminer un ou plusieurs constituants d'un fluide, notamment récipient d'absorption.**

(57) Ce récipient d'adsorption comprend une enveloppe cylindrique (1) emplie de particules d'adsorbant et dans laquelle est positionnée une chicane annulaire (11) de forme à peu près tronconique. Le fluide à traiter entre à une extrémité (6) de l'enveloppe, dans le région (16) extérieure à la chicane, parcourt la longueur de l'enveloppe, passe par les ouvertures d'extrémité (15) de la chicane, pénètre dans l'espace intérieur (17) de celle-ci et sort par une ouverture centrale (7) située du même côté que l'entrée (6).

Ainsi, le fluide a à sa disposition pendant tout son traitement une section de passage qui diminue progressivement au fur et à mesure de la progression de l'adsorption, de sorte que la vitesse du fluide reste sensiblement constante de l'entrée à la sortie.

Application aux dispositifs de production d'oxygène à partir d'air par adsorption sélective.

"RECIPIENT POUR ELIMINER UN OU PLUSIEURS CONSTITUANTS D'UN FLUIDE, NOTAMMENT RECIPIENT D'ADSORPTION".

La présente invention est relative à un récipient pour éliminer un ou plusieurs constituants d'un fluide, notamment à un récipient d'adsorption, du type comprenant une enveloppe qui définit, entre une entrée et une sortie pour le fluide à traiter, au moins deux passages concentriques successifs à écoulement axial emplis d'une masse active, les passages successifs étant séparés par une chicane annulaire coaxiale à l'enveloppe, cette ou ces chicanes obligeant le fluide à traiter à parcourir un trajet sinueux constitué de tronçons orientés axialement et se succédant de la périphérie vers l'axe de l'enveloppe.

Les récipients d'adsorption de ce type (voir par exemple le brevet GB 1.529.701) sont utilisés pour effectuer de nombreux traitements de fluides. On peut citer à titre d'exemples l'épuration de l'air destiné à être refroidi puis distillé ou la séparation d'un constituant d'un gaz, par exemple de l'oxygène de l'air, par exploitation des propriétés d'adsorption sélective de certaines matières telles que l'alumine, les tamis moléculaires ou le charbon actif.

Dans tous les cas, une partie du fluide entrant dans le récipient est fixée sur l'adsorbant (par exemple la vapeur d'eau et le gaz carbonique contenus dans l'air sur l'alumine ou l'azote de l'air sur le tamis moléculaire), de sorte que seule une fraction du débit entrant se retrouve à la sortie du récipient. Par suite, lorsqu'on utilise de simples récipients cylindriques parcourus une seule fois par le fluide à traiter d'une extrémité à l'autre, l'obtention d'un débit de sortie donné nécessite un débit d'entrée nettement plus important. On est ainsi amené à introduire le fluide avec une vitesse d'écoulement proche de la vitesse critique provoquant l'attrition des particules d'adsorbant ; il en résulte d'une part un mauvais rendement de l'adsorbant, notamment aux extrémités du récipient, et d'autre part une dégradation des performances dans le temps par attrition des granules d'adsorbant.

Les récipients du type indiqué plus haut améliorent nettement cette situation, car la section de passage offerte au fluide diminue d'un passage au suivant, au fur et à mesure de la fixation sur la masse active d'une partie du fluide traité. De plus, l'encombrement axial du récipient est réduit.

Cependant, dans les agencements connus tels que celui du brevet GB précité, la variation de section de passage s'effectue brusquement, de sorte que la vitesse d'écoulement du fluide est loin d'être constante.

L'invention a pour but de fournir un récipient qui améliore encore l'uniformité de la vitesse d'écoulement du fluide et, par suite, augmente le rendement de l'appareil et sa stabilité dans le temps.

A cet effet, l'invention a pour objet un récipient du type précité, caractérisé en ce qu'au moins une chicane définit sur chacune de ses faces un espace annulaire dont la section droite décroît progressivement dans le sens de circulation du fluide à traiter.

Dans un mode de réalisation avantageux, le récipient comprend une chicane annulaire unique de forme évasée, l'entrée et la sortie de fluide étant situées du côté le plus étroit de cette chicane.

Une utilisation optimale de la masse active est obtenue lorsque, suivant une autre caractéristique avantageuse de l'invention, l'enveloppe est limitée, du côté opposé à la sortie du fluide à traiter, par un fond qui, au moins dans la région de l'axe du récipient, est bombé vers l'intérieur de ce dernier.

Plusieurs exemples de réalisation de l'invention vont maintenant être décrits en regard des dessins annexés, sur lesquels :
- la figure 1 est une vue en coupe longitudinale d'un récipient d'adsorption conforme à l'invention ;
- les figures 2 à 4 sont des vues schématiques en coupe longitudinale, à plus petite échelle, de divers modes de réalisation du récipient suivant l'invention ;
- les figures 2A à 4A sont des diagrammes correspondant respectivement aux figures 2 à 4 et montrant, dans chaque cas, la manière dont la section de passage offerte au fluide à traiter diminue de l'entrée à la sortie du récipient .
- les figures 2B à 4B sont des diagrammes correspondant respectivement aux figures 2 à 4 et montrant, dans chaque cas, la manière dont la vitesse d'écoulement du fluide à traiter varie de l'entrée à la sortie du récipient.

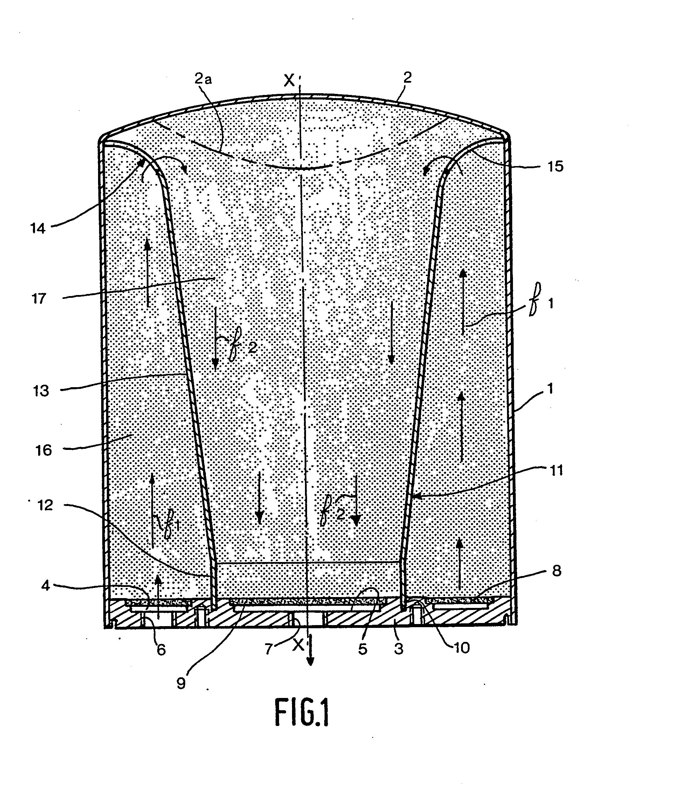

Le récipient d'adsorption représenté à la figure 1 est destiné à faire partie d'un dispositif de production d'oxygène ou d'air enrichi en oxygène par adsorption sélective sur tamis moléculaire, suivant un procédé à pression variable connu sous le nom de "Pressure Swing Adsorption" ou "P.S.A.". Ce récipient est dans l'ensemble de révolution autour d'un axe X-X supposé vertical. Il comprend une enveloppe extérieure 1 de forme cylindrique qui est fermée à une extrémité par un fond 2 bombé vers l'extérieur et ouverte à son autre extrémité, que l'on supposera être l'extrémité inférieure comme représenté.

Dans l'extrémité ouverte de l'enveloppe 1 est fixée à joint étanche une plaque ou bride plane 3. Cette plaque présente dans sa face supérieure une gorge circulaire 4 voisine de la périphérie et un évidement central 5. Elle est traversée d'une part par un orifice 6, ou une série d'orifices, qui débouche(nt) dans la gorge 4, et d'autre part par un orifice central 7 qui débouche dans l'évidement 5. L'entrée de la gorge 4 est pourvue d'un filtre annulaire 8 et, de même, l'entrée de l'évidement 5 est équipée d'un filtre 9 en forme de disque, les filtres 8 et 9 affleurant la face supérieure de la plaque 3.

La plaque 3 présente également dans sa face supérieure une rainure circulaire 10 dans laquelle est encastrée à joint étanche l'extrémité inférieure d'une chicane annulaire 11 et qui s'étend entre la gorge 4 et l'évidement 5. La chicane 11 comprend un court tronçon inférieur cylindrique 12 puis diverge suivant un tronc de cône 13 jusqu'à la région supérieure de l'enveloppe 1. Dans cette région, la chicane 11 s'évase en s'incurvant jusqu'à rejoindre la jonction entre la paroi cylindrique de l'enveloppe 1 et le fond 2. La partie d'extrémité évasée 14 de la chicane est pourvue d'une série d'entailles qui, en coopération avec l'enveloppe 1, forment autant d'ouvertures 15 réparties sur toute la périphérie.

La totalité de l'espace libre délimité par l'enveloppe 1, la plaque 3 et la chicane 11, à l'intérieur et à l'extérieur de cette dernière, est emplie d'un adsorbant qui, dans l'application considérée, est un tamis moléculaire sous forme de granules. Cet adsorbant forme ainsi un lit extérieur 16 entre l'enveloppe 1 et la chicane 11 et un lit intérieur 17 à l'intérieur de cette dernière.

Pour monter le récipient, on met la chicane 11 en place dans l'enveloppe 1 retournée, on verse et on vibre l'adsorbant, et on met en place la plaque 3. En variante, on peut utiliser une chicane 11 dépourvue de la partie d'extrémité 14, ce dans un but de simplification et d'augmentation de la section de passage du gaz. Dans ce cas, on utilise un outillage de maintien en position de la chicane pendant la phase de remplissage et de vibration du tamis moléculaire.

En fonctionnement, on utilise deux récipients identiques en parallèle, dont l'un assure la production d'air enrichi en oxygène, à une teneur en oxygène comprise entre 21 et 95 %, pendant que l'autre est régénéré par une partie de cet air enrichi. La durée de cycle choisie est telle qu'aucune zone de la masse d'adsorbant ne parvienne à l'état saturé en azote.

L'air à traiter est introduit dans le premier récipient par l'orifice 6, se répartit dans la gorge 4, traverse le filtre 8, parcourt une première fois la longueur de l'enveloppe 1 à travers le lit extérieur 16, suivant les flèches $f_1$, passe par les ouvertures 15, parcourt une deuxième fois la longueur de l'enveloppe 1 à travers le lit intérieur 17, suivant les flèches $f_2$, et enfin sort par l'orifice 7 après avoir traversé le filtre 9.

Au cours de ce trajet, l'azote de l'air est progressivement fixé par adsorption sélective sur le tamis moléculaire, de sorte que le débit d'air diminue progressivement. La section de passage offerte à l'air traité diminue progressivement de l'entrée 6 à la sortie 7 du récipient 1, ce qui compense cette diminution de débit d'une manière qui sera décrite plus en détail ci-dessous. Ainsi, on peut obtenir une vitesse d'écoulement sensiblement constante de l'air de l'entrée à la sortie, pour une pression d'alimentation donnée. Ceci permet, dans une certaine plage de pressions d'alimentation, de faire fonctionner le récipient de façon homogène et de conserver en tout point des vitesses d'écoulement convenables et, par suite, d'attein- dre des rendements élevés par unité de masse d'adsorbant et d'assurer une grande durée de vie au dispositif.

L'augmentation de production par unité de masse de tamis moléculaire que l'on obtient est variable suivant la pression d'alimentation et le débit de production. A titre d'exemple, ce gain de production peut osciller entre 5 à 10 % suivant les paramètres.

En pratique, on définit la géométrie du récipient 1 de la façon suivante :

- le rapport entre la section d'entrée et la section de sortie est fonction de l'enrichissement moyen désiré en production. A titre d'exemple, pour une production d'air enrichi à 70 % d'oxygène, ce rapport est de 3,5, c'est-à-dire sensiblement égal au rapport des débits d'entrée et de sortie ;

- la section d'entrée et/ou la plage de pression d'utilisation sont telles que le gaz à traiter n'atteigne pas les vitesses critiques caractéristiques du tamis moléculaire utilisé.

En variante, il peut être souhaitable de réduire le volume d'adsorbant situé près du fond 2, en bombant ce dernier vers l'intérieur du récipient, au moins dans la région d'axe X-X, comme représenté en trait mixte en 2a à la figure 1. Ceci présente plusieurs avantages : la diminution de la section de passage du gaz est plus régulière dans cette zone ; le rendement est amélioré, car le volume d'adsorbant supprimé participait peu au traitement ; et la hauteur et le poids du récipient sont diminués.

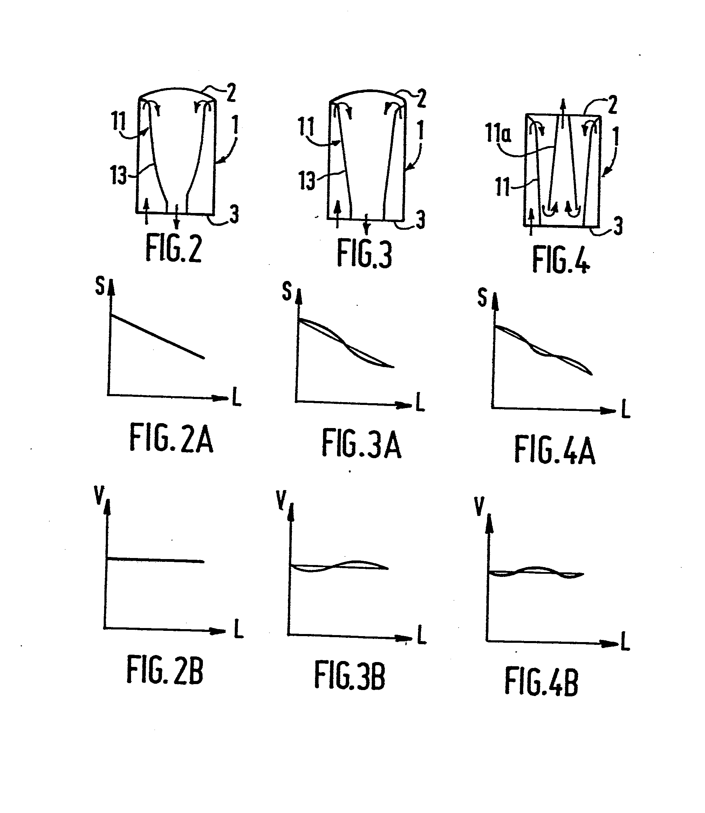

Les figures 2 à 4 représentent schématiquement divers modes de réalisation du récipient suivant l'invention.

Le récipient de la figure 2 est analogue à celui de la figure 1, à ceci près que la partie médiane 13 de la chicane 11, au lieu d'être tronconique, a la forme d'un paraboloïde de révolution d'axe X-X. Comme représenté à la figure 2a, la section de passage S diminue alors linéairement de l'entrée à la sortie en fonction de la longueur L parcourue par le fluide à traiter, ce qui conduit (figure 2b) à une vitesse d'écoulement V constante.

La figure 3 reprend schématiquement la figure 1. On voit sur la figure 3a que la section S ne diminue qu'approximativement linéairement en fonction de la longueur L et que, par suite, la vitesse V oscille légèrement autour d'une valeur moyenne. Toutefois, cette approximation est suffisante dans de nombreuses applications et permet de simplifier la fabrication de la chicane 11 par rapport à la forme idéale de la figure 2.

Le récipient de la figure 4 comprend une deuxième chicane 11a d'axe X-X, de forme à peu près tronconique convergeant vers le haut, qui part du fond 2 et qui est située radialement à l'intérieur de la chicane 11 de la figure 2 ou de la figure 3. L'évidement 5, l'orifice de sortie 7 et le filtre 9 (non représentés aux figures 2 à 6) sont reportés dans le fond 2, et l'extrémité inférieure de la chicane 11a est libre ou, en variante, rejoint la plaque 3 et présente une série d'ouvertures analogues aux ouvertures 15. Les deux chicanes 11 et 11a définissent ainsi avec l'enveloppe 1 trois lits d'adsorbant que le fluide à traiter parcourt successivement dans le sens axial en se rapprochant de l'axe du récipient, pour sortir à l'extrémité de ce dernier opposée à l'extrémité d'entrée. Comme représenté à la figure 4a, la section de passage diminue constamment de l'entrée à la sortie, presque linéairement, et la vitesse d'écoulement V (figure 4b) oscille légèrement autour d'une valeur moyenne.

Lorsqu'on multiplie le nombre de chicanes, on diminue corrélativement la hauteur de l'enveloppe 1 pour un trajet total d'écoulement donné, et l'on peut aboutir à un mode de réalisation (non représenté) dans lequel l'enveloppe a la forme d'un disque plat et est pourvue d'un grand nombre de chicanes qui s'interpénètrent et partent alternativement des deux parois d'extrémité de l'enveloppe. Dans ce cas, la diminution de la section S est très voisine de la décroissance linéaire idéale et, de façon correspondante, la vitesse V peut être considérée en pratique comme constante.

Outre les avantages indiqués plus haut, les récipients d'adsorption conformes à l'invention présentent les avantages suivants :

- pour un trajet d'écoulement donné, l'encombrement en hauteur est réduit de (n + 1) fois lorsque le récipient contient n chicanes ; l'augmentation de diamètre corrélative est bien moins importante, de sorte que l'ensemble du récipient a une forme particulièrement compacte ;

- lorsqu'il y a un nombre pair de chicanes, l'entrée et la sortie du fluide s'effectuent du même côté, ce qui peut favoriser l'implantation du dispositif d'adsorption ;

- les éléments qui constituent le récipient peuvent être réalisés par repoussage ou emboutissage, ce qui est économique, et l'ensemble du récipient est particulièrement léger ;

- la réduction progressive de la section de passage du fluide à traiter assure un autoblocage des granules d'adsorbant par effet de coin. Ceci réduit considérablement les risques de fluidisation des lits d'adsorbant et contribue donc à l'augmentation de la durée de vie de l'appareil.

Il est à noter que l'agencement suivant l'invention n'apporte aucun inconvénient pendant les phases de régénération, lesquelles s'effectuent dans cet exemple en deux étapes : une étape de décompression, qui désorbe l'essentiel de l'azote fixé, et une étape d'élution, où un fluide éluant, constitué par une partie de l'air enrichi produit par le récipient associé, circule en sens inverse (c'est-à-dire de l'orifice 7 à l'orifice 6 en considérant la figure 1). En effet, les débits entrant par l'orifice 7 pendant la régénération sont très inférieurs à ceux correspondant à la phase d'adsorption, puisque le débit entrant est nul pendant la phase de décompression et, pendant la phase d'élution, de l'ordre du quart ou du cinquième du débit d'air traité. Il n'y a donc aucun risque d'attrition des particules d'adsorbant pendant la régénération. De plus, le débit qui traverse le récipient pendant la régénération augmente progressivement de l'orifice 7 à l'orifice 6 du fait de l'azote désorbé ; grâce à l'augmentation de section de passage qui résulte de l'agencement du récipient, ce fluide en circulation n'a aucune tendance à atteindre les vitesses critiques dans la région où il sort du récipient.

On comprend que le récipient suivant l'invention peut être adapté à n'importe quelle opération d'adsorption, et plus généralement à toute opération au cours de laquelle une partie d'un fluide est fixée par voie physique et/ou chimique par une masse active.

0148796

8

REVENDICATIONS

1. Récipient pour éliminer un ou plusieurs constituants d'un fluide, notamment récipient d'adsorption, du type comprenant une enveloppe (1) qui définit, entre une entrée (6) et une sortie (7) pour le fluide à traiter, au moins deux passages concentriques successifs à écoulement axial emplis d'une masse active (16, 17), les passages successifs étant séparés par une chicane annulaire (11 ; 11, 11$a$, ..., 11$n$) coaxiale à l'enveloppe, cette ou ces chicanes obligeant le fluide à traiter à parcourir un trajet sinueux constitué de tronçons orientés axialement ($f_1$, $f_2$) et se succédant de la périphérie vers l'axe (X-X) de l'enveloppe (1), caractérisé en ce qu'au moins une chicane (11, 11$a$) définit sur chacune de ses faces un espace annulaire (16, 17) dont la section droite décroît progressivement dans le sens de circulation ($f_1$, $f_2$) du fluide à traiter.

2. Récipient suivant la revendication 1, caractérisé en ce qu'il comprend une chicane annulaire unique (11) de forme évasée, l'entrée et la sortie de fluide étant situées du côté le plus étroit de cette chicane.

3. Récipient suivant la revendication 2, caractérisé en ce que la chicane (11) a une forme tronconique.

4. Récipient suivant la revendication 2, caractérisé en ce que la chicane (11) a à peu près la forme d'un paraboloïde de révolution.

5. Récipient suivant la revendication 1, caractérisé en ce qu'il comprend deux chicanes annulaires (11, 11$a$), dont une chicane extérieure (11) divergeant à partir de l'entrée de fluide à traiter et une chicane intérieure (11$a$) convergeant vers la sortie de ce fluide.

6. Récipient suivant la revendication 1, caractérisé en ce qu'il comprend une série de chicanes (11, 11$a$ ; 11, 11$a$, ..., 11$n$) qui s'interpénètrent.

7. Récipient suivant l'une quelconque des revendications 1 à 6, caractérisé en ce que l'enveloppe (1) est cylindrique.

8. Récipient suivant l'une quelconque des revendications 1 à 7, caractérisé en ce que l'enveloppe (1) a la forme générale d'un disque plat.

9. Récipient suivant l'une quelconque des revendications 1 à 8, caractérisé en ce que l'enveloppe (1) est limitée, du côté opposé à la sortie (7) du fluide à traiter, par un fond (2$a$) qui, au moins dans la région de l'axe (X-X) du récipient, est bombé vers l'intérieur de ce dernier .

FIG.1

2/2

FIG.2

FIG.3

FIG.4

FIG.2A

FIG.3A

FIG.4A

FIG.2B

FIG.3B

FIG.4B